(19) Europäisches Patentamt
European Patent Office
Office européen des brevets

(11) EP 0 716 113 B1

(12) **EUROPEAN PATENT SPECIFICATION**

(45) Date of publication and mention of the grant of the patent:
**19.01.2000 Bulletin 2000/03**

(51) Int Cl.$^7$: **C08G 73/10**

(21) Application number: **96101755.5**

(22) Date of filing: **20.09.1990**

(54) **Polyamic acid having three-dimensional network molecular structure, polyimide obtained therefrom and process for the preparation thereof**

Polyamid-Säure mit dreidimensionaler Netzgittermolekularstruktur, daraus erhaltenes Polyimid und Verfahren zur Herstellung

Acide polyamique ayant une structure moléculaire sous forme de réseau à 3 dimensions, polyimide obtenu et son procédé de préparation

(84) Designated Contracting States:
**DE FR GB**

(30) Priority: **02.11.1989 JP 28616189**

(43) Date of publication of application:
**12.06.1996 Bulletin 1996/24**

(62) Document number(s) of the earlier application(s) in accordance with Art. 76 EPC:
**90118122.2 / 0 418 889**

(73) Proprietor: **Toho Rayon Co., Ltd.
Chuo-ku Tokyo (JP)**

(72) Inventor: **Nagata, Yasuhisa,
c/o Toho Rayon Co., Ltd.
Sunto-gun, Shizuoka (JP)**

(74) Representative:
**Hansen, Bernd, Dr. Dipl.-Chem. et al
Hoffmann Eitle,
Patent- und Rechtsanwälte,
Arabellastrasse 4
81925 München (DE)**

(56) References cited:
**EP-A- 0 274 603**

Remarks:
The file contains technical information submitted after the application was filed and not included in this specification

Note: Within nine months from the publication of the mention of the grant of the European patent, any person may give notice to the European Patent Office of opposition to the European patent granted. Notice of opposition shall be filed in a written reasoned statement. It shall not be deemed to have been filed until the opposition fee has been paid. (Art. 99(1) European Patent Convention).



Printed by Jouve, 75001 PARIS (FR)

## Description

The present invention relates to a polyamic acid which is a precursor of a polyimide resin known as a heat-resistant resin. More particularly, it relates to a novel polyamic acid having a three-dimensional network molecular structure capable of providing a gel. Furthermore, the present invention relates to the polyimide resin obtained from the polyamic acid. It also relates to processes for the preparation thereof and preparation of a film therefrom.
Methods are known for obtaining polyimide resins by polycondensing a tetracarboxylic acid dianhydride with an aromatic diamine in an organic solvent to prepare a polyamic acid as a precursor of a polyimide resin, followed by the dehydration and cyclization thereof by a chemical dehydration reaction under heating or using a dehydrating agent.
Generally, the ring opening polycondensation reaction proceeds in an organic solvent in such an amount as to give a polyamic acid concentration of 5 to 20% by weight in the solution. The solvent is removed from the solution of the polyamic acid uniformly dissolved in the organic solvent to obtain a film or a molded article.
Polyimide resins are widely used in the fields of electrical and electronical materials, adhesives, coatings, composite materials, fiber and film materials, because they are excellent in heat resistance, wear resistance, chemical resistance, electrical insulating properties and mechanical characteristics.
Polyimide resin films are also used in various ways as coating materials for electric wires, cables and wires and as insulating materials for transformers and printed-wiring boards, because of their excellent characteristics.
Generally, polyimide films are prepared by a method wherein an organic solution of a polyamic acid is cast on a support and the dehydration-cyclization reaction of the polyamic acid is accelerated by a heat treatment or a chemical treatment to obtain a polyimide film.
Alternatively, after an organic solvent solution of a polyamic acid is cast on a support, the solvent is removed by drying or the cast polyamic acid together with the support is immersed in a coagulating bath to coagulate the polymer solution, whereby a film can be obtained. The thus-obtained film is sometimes called a gel film. However, this gel film is formed by entanglement of polymer chains and does not have a three-dimensional network molecular structure formed through chemical bonds, therefore it is different from a gel film which is obtained by the present invention, which has a three-dimensional network structure.
JP-A-57-109614 (the term "JP-A" as used herein means an "unexamined published Japanese patent application") proposes a method wherein an organic solvent solution of a dehydrating agent and a polyamic acid and an organic solvent solution of a catalyst and a polyamic acid and are simultaneously applied to a support. After a gel film (obtained by entanglement of polymer chains) of the polyamic acid is formed by drying, the gel film is heat treated to obtain a polyimide film.
In the production of polyimide films, films having high mechanical characteristics can be obtained depending on the combinations of tetracarboxylic acid dianhydrides and aromatic diamines to be polycondensed. A polyimide film obtained from the combination of pyromellitic anhydride with 4,4'-diaminodiphenyl ether is a typical film which has high heat resistance and is excellent in tensile properties.
However, when heat resistance becomes higher, the film generally is brittle, and hence heat resistance is balanced against mechanical characteristics. Particularly, polyimide obtained from a combination of pyromellitic dianhydride with p-phenylenediamine has poor film properties and is brittle and extremely inferior in mechanical characteristics, though it is among the best with regard to physical and chemical heat resistance.
In the polyimide of this type, the mechanical characteristics of the polyimide film can be improved by copolymerization techniques. To improve mechanical characteristics without reducing heat resistance, JP-A-63-254131 discloses a method wherein 4,4'-diaminodiphenyl ether as another component of the aromatic diamine is copolymerized in the production of polyimide by using a combination of pyromellitic dianhydride with p-phenylenediamine. However, a large amount of 4,4'-diaminodiphenyl ether must be added to improve film forming properties and as a result, a loss of heat resistance results.
As used herein, the term "free-standing gel" means that the gel is capable of retaining its shape without causing deformation at room temperature (25°C). For example, when the gel is formed on a support as a film, the film is capable of retaining its shape without flowing even the support is inclined.
A first object of the present invention is to provide polyamic acids having a three-dimensional network molecular structure.
A second object of the present invention is to provide a polyamic acid capable of repeatedly swelling and shrinking by absorption and desorption of an organic solvent, and capable in a swollen state of forming a free-standing gel.
A third object of the present invention is to provide a polyimide having three-dimensional network molecular structure from the polyamic acid.
A fourth object of the present invention is to provide a method for preparation of film from the polyamic acid and the polyimide.
A fifth object of the present invention is to provide a method for the preparation of a polyimide film mainly

composed of a tetracarboxylic acid dianhydride and an aromatic diamine having excellent mechanical characteristics with good reproducibility and with excellent heat resistance.

The invention comprises a polyamic acid having a three-dimensional network molecular structure produced by a ring-opening polyaddition reaction of

(A) at least one tetracarboxylic acid dianhydride;
(B) at least one aromatic diamine; and
(C) at least one polyamino compound selected from the group consisting of compounds represented by formula (I) or (II):

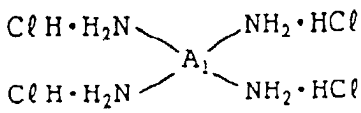

(I)

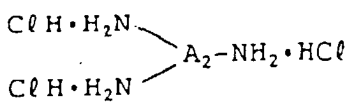

(II)

wherein $A_1$ represents

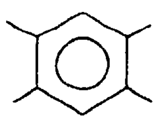 , 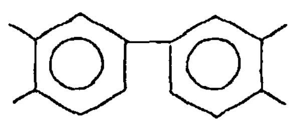

or

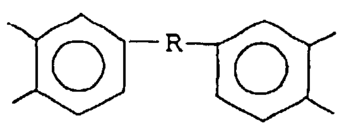 ;

$A_2$ represents

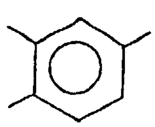 , 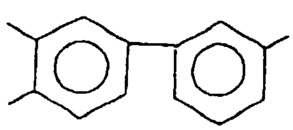

or

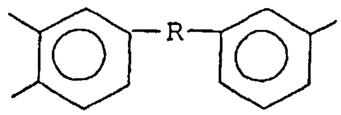 ;

R represents -O-, $-CH_2-$, -CO- or $-SO_2-$; said polyamic acid comprises in a molar ratio of (A)/(B)/(C) of 100/60-100/2-20 and satisfies the following relationship:

$$0.95 < \frac{\textit{equivalent of tetracarboxylicacid dianhydride}}{\textit{equivalent of amines}} < 1.05 .$$

Examples of tetracarboxylic acid dianhydrides include pyromellitic dianhydride, 3,3',4,4'-benzophenonetetracarboxylic acid dianhydride, 3,3',4,4'-biphenyltetracarboxylic acid dianhydride, 2,3,3',4'-biphenyltetracarboxylic acid dianhydride, 2,2',3,3'-biphenyltetracarboxylic acid dianhydride, 2,2',6,6'-biphenyltetracarboxylic acid dianhydride, 2,3,6,7-naphthalenetetracarboxylic acid dianhydride, 1,2,5,6-naphthalenetetracarboxylic acid dianhydride, 2,2-bis (3,4-dicarboxyphenyl)propane dianhydride, bis(3,4-dicarboxyphenyl)sulfone dianhydride, bis(3,4-dicarboxyphenyl) ether dianhydride, 3,4,9,10-perylenetetracarboxylic acid dianhydride, naphthalene-1,2,4,5-tetracarboxylic acid dianhydride, naphthalene-1,4,5,8-tetracarboxylic acid dianhydride, benzene-1,2,3,4-tetracarboxylic acid dianhydride and ethylene glycol bis(anhydrotrimellitate). These compounds may be used either alone or as a mixture of two or more of them.

Examples of the aromatic diamines include m-phenylenediamine, p-phenylenediamine, 4,4'-diaminodiphenylpropane, 4,4'-diaminodiphenylmethane, 3,3'-diaminodiphenylmethane, 4,4'-diaminodiphenyl sulfide, 4,4'-diaminodiphenyl sulfone, 3,3'-diaminodiphenyl sulfone, 3,4'-diaminodiphenyl sulfone, 4,4'-diaminodiphenyl ether, 3,3'-diaminodiphenyl ether, 3,4'-diaminodiphenyl ether, 4,4'-diaminobenzophenone, 3,3'-diaminobenzophenone, 2,2'-bis(4-aminophenyl)propane, benzidine, 3,3'-diaminobiphenyl, 2,6-diaminopyridine, 2,5-diaminopyridine, 3,4-diaminopyridine, bis[4-(4-aminophenoxy)phenyl] sulfone, bis[4-(3-aminophenoxy) phenyl] sulfone, bis[4-(4-aminophenoxy)phenyl] ether, bis[4-(3-aminophenoxy)phenyl] ether, 2,2'-bis[4-(4-aminophenoxy)phenyl] propane, 2,2'-bis[4-(3-aminophenoxy)phenyl] propane, 4,4'-bis(4-aminophenoxy) biphenyl, 1,4-bis(4-aminophenoxy) benzene, 1,3-bis(4-aminophenoxy) benzene, 2,2'-bis[4-(3-aminophenoxy)phenyl]-hexafluoropropane, 1,5-diaminonaphthalene, 2,6-diaminonaphthalene and derivatives thereof (i.e., substituted diamine having a substituent(s)).

The substituent for components (A), (B) and (C) should not adversely affect the condensation reaction and should not deteriorate characteristics of the products obtained therefrom. Such substituents include an aliphatic group, and a halogen atom.

These compounds may be used either alone or as a mixture of two or more of them.

Typical examples of the polyamino compounds used as component (C) include 3,3',4,4'-tetraaminodiphenyl ether tetrahydrochloride, 3,3',4,4'-tetraaminodiphenylmethane tetrahydrochloride, 3,3',4,4'-tetraaminobenzophenone tetrahydrochloride, 3,3',4,4'-tetraaminodiphenyl sulfone tetrahydrochloride, 3,3',4,4'-tetraaminobiphenyl tetrahydrochloride, 1,2,4,5-tetraaminobenzene tetrahydrochloride, 3,3'4-triaminodiphenyl trihydrochloride, 3,3'4-triaminodiphenylmethane trihydrochloride, 3,3',4-triaminobenzophenone trihydrochloride, 3,3',4-triaminodiphenylsulfone trihydrochloride, 3,3'4-triaminobiphenyl trihydrochloride, and 1,2,4-triaminobenzene dihydrochloride. The above compounds usually exist in the form of hydrated compounds. These compounds may be used either alone or as a mixture of two or more of them.

Since each of these components (A), (B) and (C) may be used as a mixture of two or more, the resulting polymers include copolymers. Furthermore, a polyamic acid gel may be obtained by mixing a first solution of a polyamic acid (prior to gelation) containing the specific components (A), (B) and (C) with a second solution of a polyamic acid (prior to gelation) wherein at least one of the aforesaid components (A), (B) and (C) is different from the above first solution, and then proceeding gelation.

The polyamic acid of the present invention can be obtained by reacting the components (A), (B) and (C) in an organic solvent at a temperature of -10 to 30°C, in an inert atmosphere. The reaction time is not longer than 10 hours, preferably not longer than 5 hours, more preferably not longer than 2 hours. When the reaction time exceeds 10 hours, a hydrolysis reaction often occurs. Usually, the reaction time is at least 5 minutes.

It is preferred from the viewpoint of handling that the amount of the organic solvent used during the reaction be controlled so that the polyamic acid gel contains 3 to 50% by weight, preferably 5 to 30% by weight of the resulting polyamic acid. When the concentration of the polyamic acid is lower than 3% by weight, the resulting gel is poorly free-standing, while when the concentration exceeds 50% by weight, the solids content is too high, the viscosity of the solution is increased during the course of the polymerization and the polymerization reaction does not proceed as

expected.

It is necessary that the organic solvent used for the reaction be inert to the reaction and capable of dissolving the components (A), (B) and (C) to be reacted. Typical examples of the organic solvent include N,N-dimethylformamide, N,N-dimethylacetamide, N,N-diethylformamide, N,N-diethylacetamide, dimethyl sulfoxide, N-methyl-2-pyrrolidone, N, N-dimethylmethoxyacetamide, hexamethylphosphoamide, pyridine, dimethyl sulfone, tetramethylene sulfone, phenols such as cresol, phenol and xylenol, benzene, toluene, xylene, benzonitrile, dioxane and cyclohexane. These solvents may be used either alone or as a mixture of two or more of them.

The molar ratio of component (A) to component (B) to component (C) (hereinafter referred to as (A)/(B)/(C)) to be reacted is in the range of 100:60-100:2-20 (hereinafter referred to as 100/(60-100)/(2-20)), more preferably 100/(70-100)/(4-15).

Generally, it is preferred that when the polyamic acid is prepared from the tetracarboxylic acid dianhydride and the aromatic diamine, both components are reacted in an equimolar ratio as much as possible to increase molecular weight. Therefore the molar ratio of (A)/(B) is kept in the range of 100/(60-100), more preferably in the range of 100/(70-100), and the molar ratio of (A)/(B)/(C) is kept in the range of 100/(60-100)/(2-20), more preferably 100/(70-100)/(4-15) to increase the degree of polymerization. Furthermore, the components (A), (B) and (C) are used in proportions such that the difference of the molar number of the reactive groups of the tetracarboxylic acid dianhydride and those of the amines is adjusted to a value within ±5%. That is, the equivalent ratio of reactants is as follows:

$$0.95 < \frac{\textit{equivalent of tetracarboxylic acid dianhydride}}{\textit{equivalent of amines}} < 1.05$$

Therefore, when a tetraamino compound is used as component (C) the following relationship should be satisfied: 0.95x [moles of (B) + 2xmoles of (C)] < moles of (A) < 1.05x[moles of (B) + 2xmoles of (C)]

When the molar ratio of (A)/(B) is not within the range of 100/(60-100), the degree of polymerization is not sufficient and the resulting three-dimensional molecular structure is imperfect. When the molar ratio of (C)/(A) is lower than 2/100, the formation of the three-dimensional network structure is insufficient, that is, gelation tends not to be caused.

When the molar ratio of (C)/(A) is higher than 20/100, the reaction proceeds rapidly, the resulting gel is suspended as small pieces in the solvent and a uniform product is difficult to obtain. Accordingly, the molar ratio of (C)/(A) preferably should be in the range of (2-20)/100.

The reaction of the components (A), (B) and (C) is a polymerization reaction of the carboxylic anhydride and amino compounds takes place. The component (A) may be added to a solution of the components (B) and (C) dissolved in an organic solvent, in an inert atmosphere such as nitrogen gas. The Component (A) may be added in the form of a solid or a solution thereof in a solvent. Alternatively, the components (B) and (C) may be added to a solution of the component (A) dissolved in an organic solvent. If desired, the component (C) may be added during the course of the reaction of the component (A) with the component (B). However, it should be noted that when the component (B) is added to a reaction system where the predetermined amounts of the components (A) and (C) are reacted, there is a possibility that the reaction will not proceed sufficiently and that gelation may not occur depending on preparation conditions.

The molecular weight of the polyamic acid is preferably 10,000 to 300,000, more preferably 30,000 to 300,000.

The degree of the network molecular structure can be increased by heating (usually 50 to 80°C), subjecting to light (such as ultraviolet ray) or by applying pressure (usually up to 3.0 $kg/cm^2$).

In addition to the components (A), (B) and (C), the reaction mixture may contain small amounts (usually up to 10 wt% based on the component (A)) of a di- or tricarboxylic acid such as trimellitic acid, a carboxylic acid anhydride or a substituted compound thereof.

The three-dimensional structure of the polyamic acid containing about 50 to 97% (based on the total weight of the polyamic acid and the solvent) by weight of the above-described organic solvent is a free-standing gel.

The content of the solvent in the three-dimensional structural product of the novel polyamic acid obtained by the present invention can be controlled by swelling or shrinkage by the absorption or desorption of the solvent. Deswelling can be conducted by heating preferably at up to 80°C under reduced pressure or by solvent replacement. The number of linkages in the chemical structure of the gel can be increased by external excitement such as temperature, light and pressure. The polyamic acid of the present invention which has a three-dimensional network structure is useful in functional high-molecular materials such as a material separating membrane, or a chemical switch using the swelling-shrinking (deswelling) function.

The polyimide resin can be obtained by subjecting the polyamic acid to a conventional dehydration and cyclization reaction. For example, imidation can be completed by a high-temperature treatment or a chemical dehydrating treatment using a dehydrating agent.

When the polyamic acid is in a gel state, the gel is preferably heated at 30 to 80°C for 0.5 to 10 hours, more

preferably at 30 to 50°C for 1 to 5 hours. Usually, the temperature is gradually elevated in order to maintain the form of the polyamic acid (usually it is film). When the polyamic acid is in a deswollen state heating is usually conducted at 150 to 500°C for 10 seconds to 10 hours, preferably at 200 to 400°C for 1 to 5 hours.

The imidation can be confirmed by observing infrared spectral absorption at 1780 $cm^{-1}$ and 1720 $cm^{-1}$.

The imidation of the polyamic acid can be conducted while retaining the polyamic acid in gel state, for example, by a method wherein dehydration and cyclization are chemically carried out by impregnating the polyamic acid with a solution of a dehydrating agent. Alternatively, the gel may be subjected to a chemical treatment after the solvent is removed from the gel or the solvent is replaced with a poor solvent.

It is effective to use acid anhydrides as dehydrating agents in the presence of amines as catalysts in the chemical dehydration reaction. Examples of the acid anhydrides include aliphatic acid anhydrides such as acetic anhydride, propionic anhydride and butyric anhydride and benzoic anhydride. These compounds may be used either alone or as a mixture of two or more of them.

Examples of the amines which can be used as catalysts include tert-amines such as trimethylamine, triethylamine, triethylenediamine, hexamethylenetetraamine, tributylamine, dimethyl-aniline, pyridine, α-picoline, β-picoline, γ-picoline, isoquinoline and lutidine. At least one amine selected from the group consisting of tert-amines is used as a catalyst.

The amount of the acid anhydride to be added in the chemical dehydration reaction is preferably 1 to 5 equivalents, more preferably 1 to 3 equivalents per equivalent of carboxyl group present in the polyamic acid. The amount of the catalyst is preferably 0.01 to 1.5 equivalents, more preferably 0.2 to 1 equivalent per equivalent of carboxyl group present in the polyamic acid.

The acid anhydride and the amine are dissolved to an organic solvent for these compounds to form a solution used for the dehydration reaction. Examples of solvents include the above-described solvents for components (A), (B) and (C). The concentration of the acid anhydride is usually 1 to 10% by weight.

The chemical treatment for imidation is preferably conducted at 0 to 80°C for 0.5 to 48 hours.

A polyimide resin having a specific molecular stereostructure can be prepared by subjecting the polyamic acid to the above-described dehydrating-cylization reaction. A polyimide gel having a three-dimensional network molecular structure can be obtained when the imidation is conducted using the polyamic acid gel. A polyimide gel containing the above-described organic solvent in an amount depending on preparation conditions can be obtained.

The state of the three-dimensional network structure of the novel polyimide resin obtained by the present invention can be changed by swelling or shrinking by absorption or desorption of the solvent.

The resulting polyimide resin has excellent heat resistance and hence the resulting polyimide resin is useful as a functional high-molecular material having a material separating ability, an excitation response effect or a catalytic effect.

The process for the preparation of polyimide film includes the steps of casting or coating an organic solvent solution of the polyamic acid of the present invention on a support to prepare a gel film of the polyamic acid which gives a free-standing three-dimensional network structure, and subjecting it to a dehydration-cyclization reaction after peeling or without peeling the film from the support. Examples of support material include glass, metals, ceramics, and polymer resins such as a polyester resin.

Typical examples of the tetracarboxylic acid dianhydride preferably used as the component (A) for preparation of the polyimide film in the present invention include pyromellitic dianhydride, benzophenonetetracarboxylic acid dianhydride or biphenyltetracarboxylic acid dianhydride alone or a mixture of two or more thereof as the tetracarboxylic acid dianhydride. They are preferred because a polyimide film having high heat resistance and excellent mechanical characteristics (e.g., tensile strength) can be obtained.

Typical examples of the aromatic diamine preferably used as the component (B) for preparation the polyimide film of the present invention include p-phenylenediamine, m-phenylenediamine and 4,4-diaminodiphenyl ether alone or a mixture of two or more thereof. They are preferred because a polyimide film having high heat resistance and excellent mechanical characteristics can be obtained.

When the reaction temperature of components (A), (B) and (C) is lower than -10°C, there is difficulty in handling the reaction system and further, there is a possibility that the reaction temperature itself is too low for the reaction to proceed sufficiently. When the reaction temperature is higher than 80°C, the reaction proceeds too rapidly until gelation is caused, and there is a possibility that gelation will occur before film formation, and a uniform film cannot be obtained. Accordingly, when a film is prepared from a solution of a polyamic acid obtained by polyaddition of the component (A) with the components (B) and (C), it is preferred that the solution of the polyamic acid and a substrate for use in the preparation of the film are controlled to a temperature of from 0 to +30°C prior to the preparation of the film and then the solution of the polyamic acid is cast or coated on a support to prepare the film.

When the components are blended in a composition outside the range defined above, for example, in proportions such that (moles of A) < 0.95x[(moles of B) + 2x(moles of C of formula (I))], and reacted, the molecular weight of polymer is low and the properties such as mechanical properties of the resulting polymer film are remarkably poor.

On the other hand, when the proportions are such that (moles of A) > 1.05x[(moles of B) + 2x(moles of C)], unreacted monomers are left in the polymer solution and the characteristics of the film obtained by the evaporation and drying of the polymer solution are adversely affected. For example, the thermal properties and hygroscopic properties of the finally obtained polyimide film may be lowered.

When the molar ratio of (C)/(A) is higher than 20/100, the crosslinking points of the three-dimensional network structure are increased, the film properties of the gel structure are adversely affected, and the film is apt to be brittle. Accordingly, the molar ratio of (C) /(A) is preferably in the range of (2 to 20)/100.

Further, when the ratio of (C)/(A) is increased, the heat resistance of the polyimide resin obtained by the dehydration and cyclization reaction tends to be lower and hence the molar ratio of (C)/(A) is more preferably at most 15/100.

In the film of the polyamic acid prepared from the components (A), (B) and (C) of the present invention, gelation is caused after the solution of the polyamic acid is cast on a support, whereby a gel film of the polyamic acid is obtained. The gel film is free-standing when it contains about 50 to 97% by weight of the organic solvent based on the total amount of the gel film. It is preferred that when a polyimide film is prepared from the gel film of the polyamic acid as a precursor, the solvent is removed at a temperature of not higher than 100°C under atmospheric pressure or vacuum to adjust the solvent content of the gel film 0 to 50% by weight, preferably not higher than 40% by weight, and the resulting film is subjected to a dehydration and cyclization reaction to give a polyimide film. According to this method, there can be obtained a film with remarkably few defects that is excellent in physical properties (such as tensile strength).

Further, a polyimide film can be obtained in the following manner. The gel film of the polyamic acid which contains the solvent is immersed in a coagulating bath comprising a poor solvent for the polyamic acid, whereby the organic solvent left in the film is removed by the substitution of the solvent or the washing of the film is carried out. Thereafter, the film is peeled off from the support and treated at a high temperature or chemically treated to obtain a polyimide film. In this operation, water is generally used as a coagulating liquid. Alcohols such as methanol and ethanol may be used with water in an amount of not more than 50% by weight based on the total amount of the coagulating liquid. Further, ketones such as acetone, amide solvents such as N,N-dimethylacetamide and chlorine-containing solvents such as 1,2-di-chloroethane may be used in an amount of not more than 20% by weight based on the total amount of the coagulating liquid. When the above-described washing of the film is intensified, impurities such as chlorine contained in the film can be removed.

As a method for allowing imidation while retaining the three-dimensional network molecule structuree, imidation can be conducted in a manner similar to those used for conventional polyimide resins.

For example, when imidation is to be completed by a high-temperature treatment, the free-standing gel film of the polyamic acid is dried until the amount of the solvent is reduced to 0 to 10% by weight at a temperature of 50 to 200°C for at least 10 seconds and further heat-treated at an elevated temperature of 150 to 500°C, preferably 200 to 450°C. When the above treatment is carried out while fixing both ends in the longer length direction of the film by means of a fixing frame, a fastener or a pin guide, a film excellent in dimensional stability and mechanical characteristics can be obtained. This method is very effective, because the gel film of the polyamic acid is greatly shrunk by drying or heat treatment in particular.

Further, a method can be used wherein the three-dimensional network structural gel film of the polyamic acid is immersed in a solution of a dehydrating agent or a solution of a dehydrating agent is applied by penetrating in the gel film by coating or spraying onto the gel film as described hereinbefore for imidation processing, to perform chemical dehydration and cyclization.

The polyimide film obtained from the gel film of the novel polyamic acid of the present invention has a three-dimensional network molecular structure. Hence, the mechanical characteristics of the film itself are improved and excellent heat resistance and mechanical strength with toughness are imparted to the film.

According to the present invention a uniform polyimide film can be formed from the polyamic acid gel.

A polyimide film having a specific performance can be prepared by the mechanical treatment such as orientation of the film or the preparation of a coagulated porous film by the substitution of the solvent in a coagulating bath.

In particular polyimides having high heat resistance (a) a combination of one or more of pyromellitic dianhydride, benzophenonetetracarboxylic acid dianhydride and biphenyltetracarboxylic acid dianhydride as the tetracarboxylic acid dianhydride component, (b) one or more members of p-phenylenediamine, m-phenylenediamine and 4,4'-diaminodiphenyl ether as the aromatic diamine component and (c) component (C). The improvement of film due to the formation of the three-dimensional molecular structure of the polyamic acid by the addition of the component (C) is remarkable.

Since the film thus obtained has a specific molecular structure, the state of the film structure can be changed by swelling or shrinkage (by penetration of the solvent or deswelling), or by changing the number of linkage in the molecular structure by external excitement such as temperature, light or pressure. Further, the film has excellent heat resistance and the film is useful as a functional high-molecular material having a material separating ability, an excitation

response effect or a catalytic effect.

Various additives, for example, metallic compounds, low-molecular organic compounds (other than the solvent), high-molecular compounds (for example, a polyamic acid derived from components (A) and (B) and plyimide derived from components (A) and (B), inorganic fillers, coloring materials, and/or reinforcing fiber may be present in the three-dimensional molecular network structure of the polyamic acid or polyimide of the present invention.

Polyamic acids or polyimides of the present invention having different components (A), (B) and (C) or different amounts of each of components may be used as a mixture. The polyamic acids may also be mixed with the polyamide.

Table 1 (No. 2)

| Classification | Abbreviation | Name | Chemical structural formula | Mol. wt. |
| --- | --- | --- | --- | --- |
| Tetracarboxylic acid dianhydride (Component A) | PMDA | Pyromellitic dianhydride | 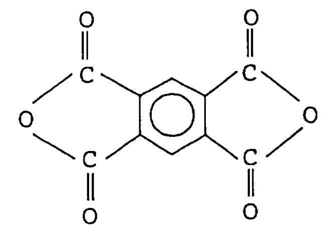 | 218 |
| | BTDA | 3,3',4,4'-benzophenone-tetracarboxylic acid dianhydride | 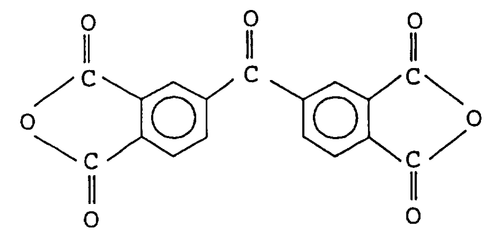 | 322 |
| | DSTA | diphenylsulfone-3,3',4,4'-tetracarboxylic acid dianhydride | 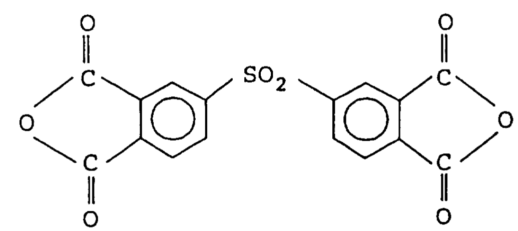 | 358 |

Table 1 (No. 2) (cont'd)

| Classification | Abbreviation | Name | Chemical structural formula | Mol. wt. |
|---|---|---|---|---|
| Tetracarboxylic acid dianhydride (Component A) | BPDA | 3,3',4,4'-biphenyl-tetracarboxylic acid dianhydride | 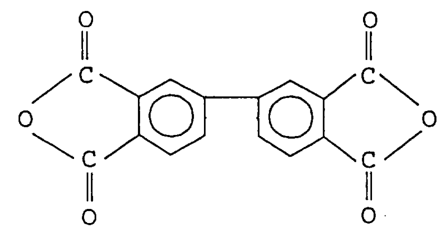 | 294 |

Table 1 (No. 3)

| Classification | Abbreviation | Name | Chemical structural formula | Mol. wt. |
|---|---|---|---|---|
| Aromatic diamine (Component B) | PPD | p-phenylenediamine | 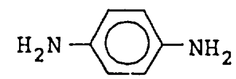 | 108 |
| | MPD | m-phenylenediamine | 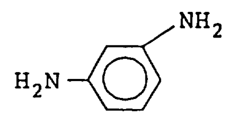 | 108 |
| | 4,4'-DPE | 4,4'-diaminodiphenyl ether | 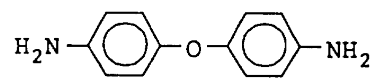 | 200 |

Table 1 (No. 3) (cont'd)

| Classification | Abbreviation | Name | Chemical structural formula | Mol. wt. |
|---|---|---|---|---|
| Aromatic diamine (Component B) | BAPB | 4,4-bis(4-aminophenoxy)-biphenyl | 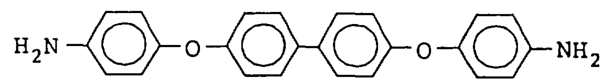 | 368 |
| | TPE-R | 1,3-bis(3-aminophenoxy)-benzene | 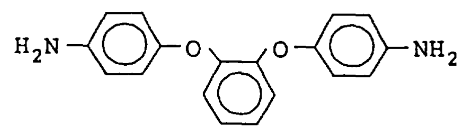 | 292 |
| | TPE-Q | 1,4-bis(4-aminophenoxy)-benzene | 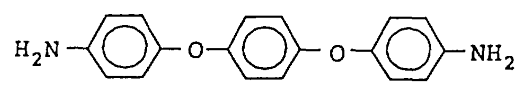 | 292 |

Table 1 (No. 4)

| Classification | Abbreviation | Name | Chemical structural formula | Mol. wt. |
|---|---|---|---|---|
| Tetraamine (Component C) | TABT | 3,3',4,4'-tetraamino-biphenyl tetrahydrochloride dihydrate | 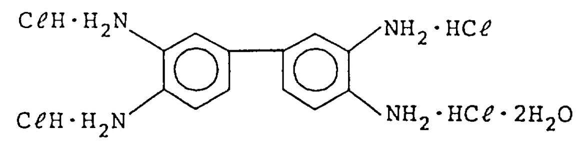 | 396 |
| | TADET | 3,3',4,4'-tetraamino-diphenyl ether tetrahydrochloride | 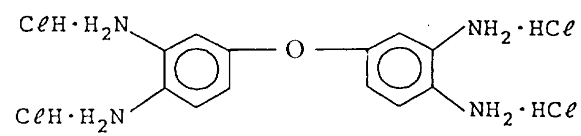 | 376 |
| | TADMT | 3,3',4,4'-tetraamino-diphenylmethane tetrahydrochloride | 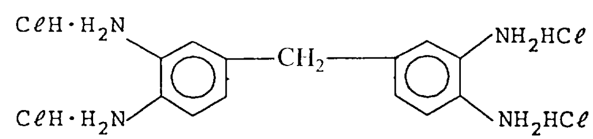 | 365 |

**Claims**

1. A polyamic acid having a three-dimensional network molecular structure produced by a ring-opening polyaddition reaction of

(A) at least one tetracarboxylic acid dianhydride;
(B) at least one aromatic diamine; and
(C) at least one polyamino compound selected from the group consisting of compounds represented by formula (I) or (II):

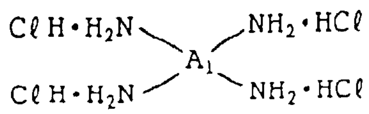

(I)

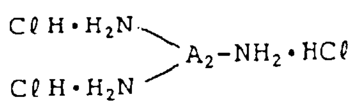

(II)

wherein $A_1$ represents

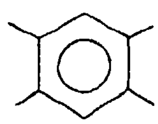

,

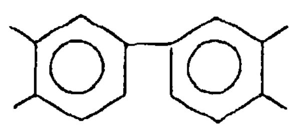

or

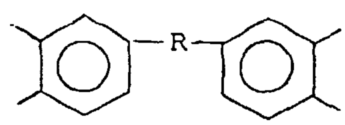

;

$A_2$ represents

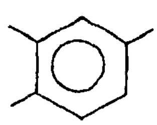

,

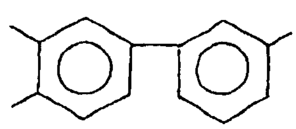

or

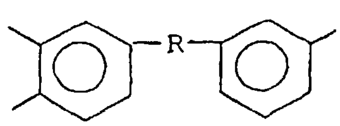

;

R represents -O-, $-CH_2-$, -CO- or $-SO_2-$; said polyamic acid comprises in a molar ratio of (A)/(B)/(C) of 100/60-100/2-20 and satisfies the following relationship:

$$0.95 < \frac{\textit{equivalent of tetracarboxylic acid dianhydride}}{\textit{equivalent of amines}} < 1.05 .$$

**2.** The polyamic acid as claimed in claim 1, wherein said tetracarboxylic acid dianhydride is selected from pyromellitic dianhydride, 3,3',4,4'-benzophenonetetracarboxylic acid dianhydride, 3,3',4,4'-biphenyltetracarboxylic acid dianhydride, 2,3,3',4'-biphenyltetracarboxylic acid dianhydride, 2,2',3,3'-biphenyltetracarboxylic acid dianhydride, 2,2',6,6'-biphenyltetracarboxylic acid dianhydride, 2,3,6,7-naphthalenetetracarboxylic acid dianhydride, 1,2,5,6-naphthalenetetracarboxylic acid dianhydride, 2,2-bis(3,4-dicarboxyphenyl)propane dianhydride, his (3,4-dicarboxyphenyl)sulfone dianhydride, his(3,4-dicarboxyphenyl)ether dianhydride, 3,4,9,10-perylenetetracarboxylic acid dianhydride, naphthalene-1,2,4,5-tetracarboxylic acid dianhydride, naphthalene-1,4,5,8-tetracarboxylic acid dianhydride, benzene-1,2,3,4-tetracarboxylic acid dianhydride and ethylene glycol bis(anhydrotrimellitate).

**3.** The polyamic acid as claimed in claim 1, wherein said aromatic diamine is selected from m-phenylenediamine, p-phenylenediamine, 4,4'-diaminodiphenylpropane, 4,4'-diaminodiphenylmethane, 3,3'-diaminodiphenylmethane, 4,4'-diaminodiphenyl sulfide, 4,4'-diaminodiphenyl sulfone, 3,3'-diaminodiphenyl sulfone, 3,4'-diaminodiphenyl sulfone, 4,4'-diaminodiphenyl ether, 3,3'-diaminodiphenyl ether, 3,4'-diaminodiphenyl ether, 4,4'-diaminobenzophenone, 3,3'-diaminobenzophenone, 2,2'-bis(4-aminophenyl )propane, benzidine, 3,3'-diaminobiphenyl, 2,6-diaminopyridine, 2,5-diaminopyridine, 3,4-diaminopyridine, bis[4-(4-aminophenoxy)phenyl] sulfone, bis[4-(3-aminophenoxy) phenyl] sulfone, bis[4-(4-aminophenoxy)phenyl] ether, bis[4-(3-aminophenoxy)phenyl] ether, 2,2'-bis[4-(4-aminophenoxy)phenyl] propane, 2,2'-bis[4-(3-aminophenoxy)phenyl] propane, 4,4'-bis (4-aminophenoxy) biphenyl, 1,4-bis(4-aminophenoxy) benzene, 1,3-bis(4-aminophenoxy) benzene, 2,2'-bis[4-(3-aminophenoxy)phenyl]-hexafluoropropane, 1,5-diaminonaphthalene, 2,6-diaminonaphthalene and derivatives thereof.

**4.** The polyamic acid as claimed in claim 1, wherein said polyamic acid has a molecular weight of from 10,000 to 300,000.

**5.** The polyamic acid as claimed in claim 1, wherein said polyamic acid is in the form of a free-standing gel capable of retaining its shape without causing deformation at 25°C.

**6.** The polyamic acid as claimed in claim 5, wherein said gel contains an organic solvent in an amount of from 50 to 97% by weight based on the total weight of the gel.

**7.** The polyamic acid as claimed in claim 5, wherein said free-standing gel is in the form of a film.

**8.** A process for making a polyamic acid having a three-dimensional network molecular structure comprising, conducting a ring-opening polyaddition reaction of (A) at least one tetracarboxylic acid dianhydride, (B) at least one aromatic diamine, and (C) at least one polyamino compound selected from compounds represented by formula I or II in an organic solvent at a temperature of -10 to +30°C

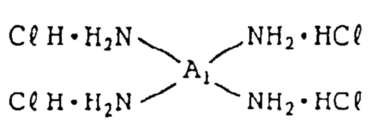

(I)

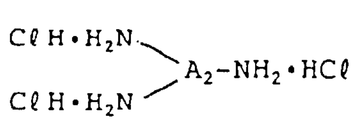

(II)

wherein $A_1$ represents

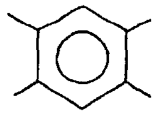
,
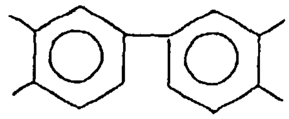

or $A_2$ represents

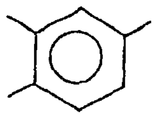
,
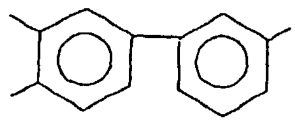

or

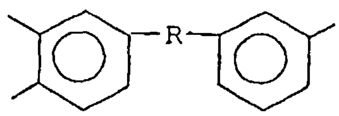
;

R represents -O-, $-CH_2-$, -CO- or $-SO_2-$; said polyamic acid comprises in a molar ratio of (A)/(B)/(C) of 100/60-100/2-20 and satisfies the following relationship:

$$0.95 < \frac{\textit{equivalent of tetracarboxylic acid dianhydride}}{\textit{equivalent of amines}} < 1.05 .$$

**9.** The process as claimed in claim 8, wherein said polyamic acid reaction product is in the form of a free-standing gel capable of retaining its shape without causing deformation at 25°C.

**10.** The process as claimed in claim 8, wherein said solvent is used in an amount of 50 to 97% by weight of the total weight of the polyamic acid to be produced and the solvent.

**11.** The process as claimed in claim 8, comprising the further step of casting the solution formed in said step as a film on a support, wherein said reaction is completed on said support to provide a gel film of said polyamic acid three dimensional network molecular structure.

**12.** A process for producing a polyimide resin comprising the steps of:

(a) conducting a ring-opening polyaddition reaction of

(A) at least one tetracarboxylic acid dianhydride;
(B) at least one aromatic diamine; and
(C) at least one polyamino compound selected from compounds represented by formula I or II in an organic solvent for these reaction compounds;

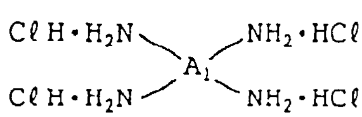
(I)

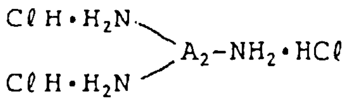 (II)

wherein $A_1$ represents

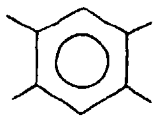 , 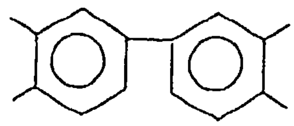

or

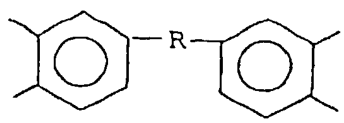 ;

$A_2$ represents

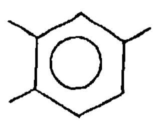 , 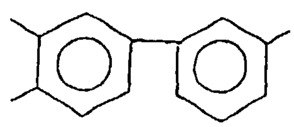

or

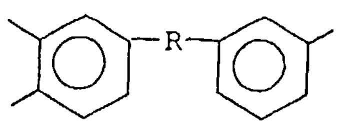 ;

R represents -O-, $-CH_2-$, -CO- or $-SO_2-$; said polyamic acid comprises in a molar ratio of (A)/(B)/(C) of 100/60-100/2-20 and satisfies the following relationship:

$$0.95 < \frac{\textit{equivalent of tetracarboxylic acid dianhydride}}{\textit{equivalent of amines}} < 1.05$$

(b) dehydrating and cyclizing said polyamic acid to produce a polyimide resin.

**13.** The process as claimed in claim 12, wherein said dehydrating and cyclizing step is conducted after drying the reaction product to remove the solvent and then heating the polyamic acid.

**14.** The process as claimed in claim 12, wherein said dehydrating and cyclizing step is conducted by heating said polyamic acid in a form of a gel.

**15.** The process as claimed in claim 14, wherein said polyamic acid gel contains 50 to 97% by weight of said organic solvent.

**16.** The process as claimed in claim 12, wherein said dehydrating and cyclizing step is conducted by contacting said polyamic acid with a solution of dehydrating agent.

**17.** The process as claimed in claim 12, wherein said dehydrating and cyclizing step comprises the steps of removing at least a portion of said organic solvent from said polyamic acid and subsequently contacting said polyamic acid with a solution of dehydrating agent.

**18.** The process as claimed in claim 12, wherein said dehydrating agent is an acid anhydride and said dehydrating and cyclizing reaction is conducted in the presence of an amine as a catalyst.

**19.** The process as claimed in claim 12, comprising the further step of casting the solution formed in step (a) as a film on a support, wherein said reaction in step (a) is completed on said support to provide a gel film of said polyamic acid three dimensional network molecular structure.

**20.** The process as claimed in claim 12, comprising the additional steps of:
dehydrating and cyclizing said said polyamic acid gel film to provide a polyimide film.

**21.** A polyimide resin produced by dehydrating and cyclizing a polyamic acid having three-dimensional network molecular structure, said polyamic acid being produced by ring-opening polyaddition reaction of

(A) at least one tetracarboxylic acid dianhydride;
(B) at least one aromatic diamine; and
(C) at least one polyamino compound selected from compounds represented by formula I or II

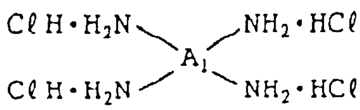 (I)

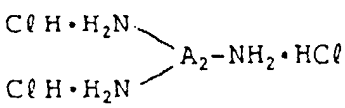 (II)

wherein $A_1$ represents

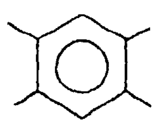 , 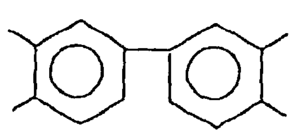

or

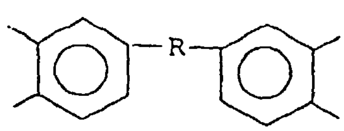 ;

$A_2$ represents

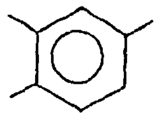 , 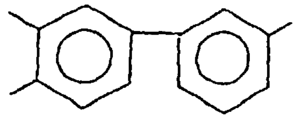

or

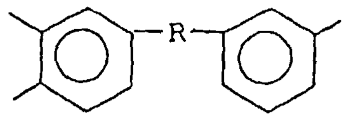 ;

R represents -O-, $-CH_2-$, -CO- or $-SO_2-$; said polyamic acid comprises in a molar ratio of (A)/(B)/(C) of 100/60-100/2-20 and satisfies the following relationship:

$$0.95 < \frac{\textit{equivalent of tetracarboxylic acid dianhydride}}{\textit{equivalent of amines}} < 1.05 .$$

**22.** The polyimide resin as claimed in claim 21, wherein said polyimide resin is in the form of a film.

**23.** The process as claimed in claim 13, wherein said dehydrating and cyclizing step is conducted after drying the reaction product to remove the solvent and then heating the polyamic acid at a temperature of not higher than 500°C.

**24.** The process as claimed in claim 12, comprising the additional steps of:

(c) removing said organic solvent from said gel film at a temperature of at most 100°C to reduce the solvent content of said gel film to at most 50% by weight;

(d) dehydrating and cyclizing said polyamic acid gel film to provide a polyimide film.

**25.** The process as claimed in claim 24, wherein step (c) the solvent content of said polyamic acid film is reduced to not higher than 40% by weight, and said dehydrating and cyclizing step (d) is performed by heating said polyamic acid gel film at a temperature of up to 500°C for a time sufficient substantially to convert said polyamic acid gel to a polyimide.

**Patentansprüche**

**1.** Polyamidsäure mit einer dreidimensionalen Netzwerkmolekularstruktur, hergestellt durch eine Ringöffnungs-Polyadditionsreaktion von

(A) wenigstens einem Tetracarbonsäuredianhydrid;
(B) wenigstens einem aromatischen Diamin, und
(C) wenigstens einer Polyaminoverbindung, ausgewählt aus Verbindungen der Formel (I) oder (II):

(I) 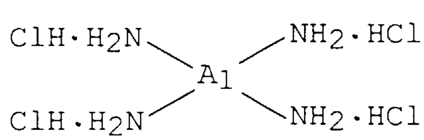

(II) 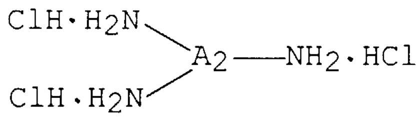

worin $A_1$ steht für

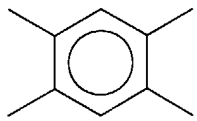 , 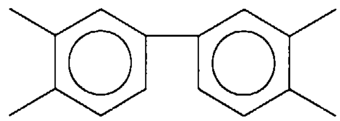

oder 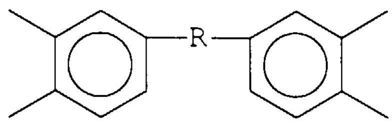

;

A2 steht für

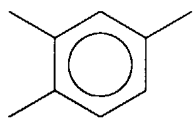 , 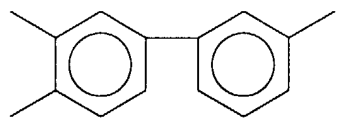

oder 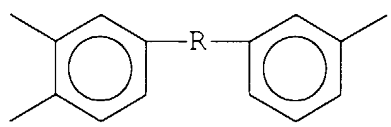

und R bedeutet -O-, $-CH_2-$, -CO- oder $-SO_2-$; wobei die Polyamidsäure in einem Molverhältnis (A)/(B)/(C) von 100/60-100/2 - 20 vorliegt und folgender Gleichung genügt:

$$0{,}95 < \frac{\text{Äquivalent von Tetracarbonsäuredianhydrid}}{\text{Äquivalent von Aminen}} < 1{,}05$$

**2.** Polyamidsäure gemäß Anspruch 1, worin das Tetracarbonsäuredianhydrid ausgewählt ist aus Pyromellitsäuredianhydrid, 3,3',4,4'-Benzophenontetracarbonsäure-dianhydrid, 3,3',4,4'-Biphenyltetracarbonsäuredianhydrid, 2,3,3',4'-Biphenyltetracarbonsäuredianhydrid, 2,2',3,3'-Biphenyltetracarbonsäuredianhydrid, 2,2',6,6'-Biphenyltetracarbonsäuredianhydrid, 2,3,6,7-Naphthalintetracarbonsäuredianhydrid, 1,2,5, 6-Naphthalintetracarbonsäuredianhydrid, 2,2-Bis (3,4-dicarboxyphenyl)propandianhydrid, Bis(3,4-Dicarboxyphenyl)sulfondianhydrid, Bis (3,4-Dicarboxyphenyl)etherdianhydrid, 3,4,9,10-Perylentetracarbonsäuredianhydrid, Naphthalin-1,2,4,5-tetracarbonsäuredianhydrid, Naphthalin-1,4,5,8-tetracarbonsäuredianhydrid, Benzol-1,2,3,4-tetracarbonsäuredianhydrid und Ethylenglykol-bis(anhydrotrimellitat).

**3.** Polyamidsäure gemäß Anspruch 1, worin das aromatische Diamin ausgewählt ist aus
m-Phenylendiamin, p-Phenylendiamin, 4,4'-Diaminodiphenylpropan, 4,4'-Diaminodiphenylmethan, 3,3'-Diaminodiphenylmethan, 4,4'-Diaminodiphenylsulfid, 4,4'-Diaminodiphenylsulfon, 3,3'-Diaminodiphenylsulfon, 3,4'-Diaminodiphenylsulfon, 4,4'-Diaminodiphenylether, 3,3'-Diaminodiphenylether, 3,4'-Diaminodiphenylether, 4,4'-Diaminobenzophenon, 3,3'-Diaminobenzophenon, 2,2'-Bis(4-aminophenyl)propan, Benzidin, 3,3'-Diaminobiphenyl, 2,6-Diaminopyridin, 2,5-Diaminopyridin, 3,4-Diaminopyridin, Bis[4-(4-aminophenoxy)phenyl]sulfon, Bis[4-(3-aminophenoxy)phenyl]sulfon, Bis[4-(4-aminophenoxy)phenyl]ether, Bis[4-(3-aminophenoxy)phenyl]ether, 2,2'-Bis[4-(4-aminophenoxy)phenyl]propan, 2,2'-Bis[4-(3-aminophenoxy)phenyl]propan, 4,4'-Bis (4-aminophenoxy)biphenyl, 1,4-Bis(4-aminophenoxy)benzol, 1,3-Bis(4-aminophenoxy)benzol, 2,2'-Bis[4-(3-aminophenoxy)phenyl]hexafluoropropan, 1,5-Diaminonapthalin, 2,6-Diaminonaphthalin und Derivate davon.

**4.** Polyamidsäure gemäß Anspruch 1, worin die Polyamidsäure ein Molekulargewicht von 10.000 bis 300.000 hat.

**5.** Polyamidsäure gemäß Anspruch 1, worin die Polyamidsäure in Form eines freistehenden Gels vorliegt, das in der Lage ist, seine Form bei 25°C beizubehalten, ohne Deformation zu verursachen.

**6.** Polyamidsäure gemäß Anspruch 5, worin das Gel ein organisches Lösungsmittel in einer Menge von 50 bis 97 Gew.-%, bezogen auf das Gesamtgewicht des Gels, enthält.

**7.** Polyamidsäure gemäß Anspruch 5, worin das freistehende Gel in Form eines Films vorliegt.

**8.** Verfahren zum Herstellen einer Polyamidsäure mit einer dreidimensionalen Netzwerkmolekularstruktur, umfassend das Durchführen einer Ringöffnungs-Polyadditionsreaktion von (A) wenigstens einem Tetracarbonsäuredianhydrid, (B) wenigstens einem aromatischen Diamin, und (C) wenigstens einer Polyaminoverbindung, ausgewählt aus Verbindungen der Formel I oder II in einem organischen Lösungsmittel bei einer Temperatur von -10 bis +30°C:

(I)

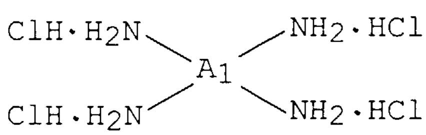

(II)

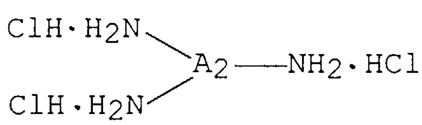

worin $A_1$ steht für

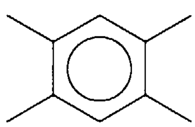

,

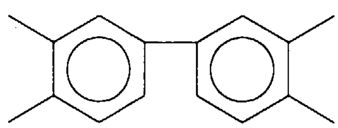

oder

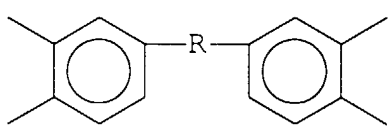

;

A2 steht für

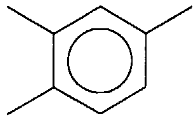 , 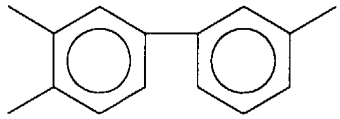

oder 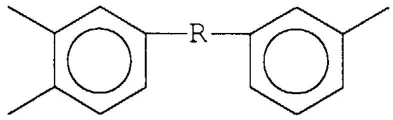

und R bedeutet -O-, $-CH_2-$, -CO- oder $-SO_2-$; wobei die Polyamidsäure in einem Molverhältnis (A)/(B)/(C) von 100/60-100/2 - 20 vorliegt und folgender Gleichung genügt:

$$0{,}95 < \frac{\text{Äquivalent von Tetracarbonsäuredianhydrid}}{\text{Äquivalent von Aminen}} < 1{,}05$$

**9.** Verfahren gemäß Anspruch 8, worin das Polyamidsäure-Reaktionsprodukt in Form eines freistehenden Gels vorliegt, das in der Lage ist, seine Form bei 25 °C beizubehalten, ohne Deformation zu verursachen.

**10.** Verfahren gemäß Anspruch 8, worin das Lösungsmittel in einer Menge von 50 bis 97 Gew.-%, bezogen auf das Gesamtgewicht der herzustellenden Polyamidsäure und des Lösungsmittels, vorliegt.

**11.** Verfahren gemäß Anspruch 8, umfassend den weiteren Schritt, daß die in dem Schritt gebildete Lösung als Film auf einen Träger gegossen wird, wobei die Reaktion auf dem Träger vervollständigt wird, und so ein Gelfilm der Polyamidsäure mit dreidimensionaler Netzwerkmolekularstruktur gebildet wird.

**12.** Verfahren zur Herstellung eines Polyimidharzes, umfassend die Schritte:

(a) Durchführen einer Ringöffnungs-Polyadditionsreaktion von:

(A) wenigstens einem Tetracarbonsäuredianhydrid;
(B) wenigstens einem aromatischen Diamin; und
(C) wenigstens einer Polyaminoverbindung, ausgewählt aus Verbindungen der Formel I oder II in einem organischen Lösungsmittel für diese Reaktionsverbindungen:

(I) 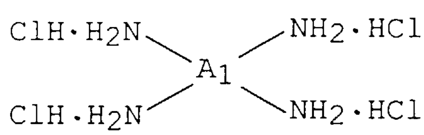

(II) 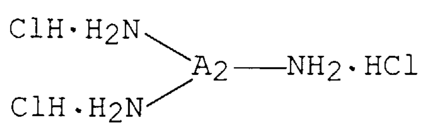

worin $A_1$ steht für

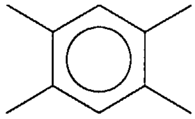 , 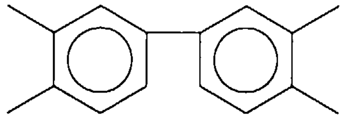

oder 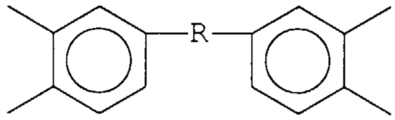

;

A2 steht für

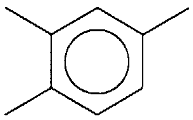 , 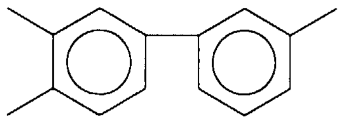

oder 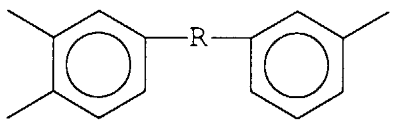

und R bedeutet -O-, $-CH_2-$, -CO- oder $-SO_2-$; wobei die Polyamidsäure in einem Molverhältnis (A)/(B)/(C) von 100/60-100/2 - 20 vorliegt und folgender Gleichung genügt:

$$0{,}95 < \frac{\text{Äquivalent von Tetracarbonsäuredianhydrid}}{\text{Äquivalent von Aminen}} < 1{,}05$$

(b) Dehydratisieren und Cyclisieren der Polyamidsäure zur Herstellung eines Polyimidharzes.

**13.** Verfahren gemäß Anspruch 12, worin der Dehydratisierungs- und Cyclisierungsschritt durchgeführt wird nach Trocknen des Reaktionsproduktes zur Entfernung des Lösungsmittels und anschließendes Erhitzen der Polyamidsäure.

**14.** Verfahren gemäß Anspruch 12, worin der Dehydratisierungs- und Cyclisierungsschritt durch Erhitzen der Polyamidsäure in Form eines Gels durchgeführt wird.

**15.** Verfahren gemäß Anspruch 14, worin das Polyamidsäuregel 50 bis 97 Gew.-% des organischen Lösungsmittels enthält.

**16.** Verfahren gemäß Anspruch 12, worin der Dehydratisierungs- und Cyclisierungsschritt durchgeführt wird, indem die Polyamidsäure mit einer Lösung eines Dehydratisierungsmittels in Kontakt gebracht wird.

**17.** Verfahren gemäß Anspruch 12, worin der Dehydratisierungs- und Cyclisierungsschritt die Schritte umfaßt, daß wenigstens ein Teil des organischen Lösungsmittels aus der Polyamidsäure entfernt wird, und anschließend die Polyamidsäure mit einer Lösung eines Dehydratisierungsmittels in Kontakt gebracht wird.

**18.** Verfahren gemäß Anspruch 12, worin das Dehydratisierungsmittel ein Säureanhydrid ist, und die Dehydratisierungs- und Cyclisierungsreaktion in Gegenwart eines Amins als Katalysator durchgeführt wird.

**19.** Verfahren gemäß Anspruch 12, umfassend den weiteren Schritt, daß die in Schritt (a) gebildete Lösung als Film

auf einen Träger gegossen wird, wobei die Reaktion in Schritt (a) auf dem Träger vervollständigt wird und so ein Gelfilm der Polyamidsäure mit dreidimensionaler Netzwerkmolekularstruktur gebildet wird.

**20.** Verfahren gemäß Anspruch 12, umfassend den weiteren Schritt, daß der Polyamidsäuregelfilm dehydratisiert und cyclisiert wird und so ein Polyimidfilm erhalten wird.

**21.** Polyimidharz, hergestellt durch Dehydratisieren und Cyclisieren einer Polyamidsäure mit dreidimensionaler Netzwerkmolekularstruktur, wobei die Polyamidsäure hergestellt wird durch Ringöffnungs-Polyadditionsreaktion von

(A) wenigstens einem Tetracarbonsäuredianhydrid;
(B) wenigstens einem aromatischen Diamin und
(C) wenigstens einer Polyaminoverbindung,

ausgewählt aus Verbindungen der Formel I oder II

(I) 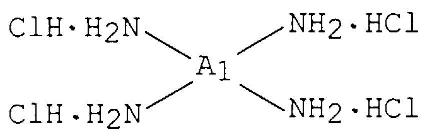

(II) 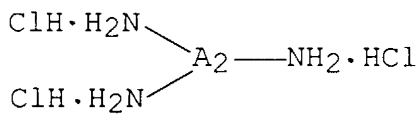

worin $A_1$ steht für

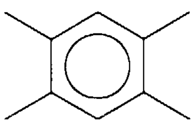 , 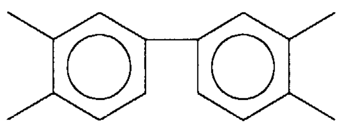

oder 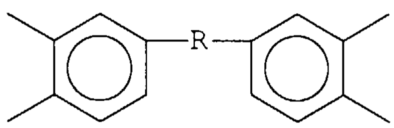

;

A2 steht für

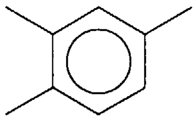 , 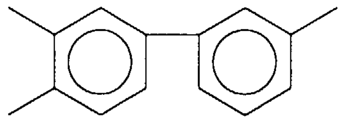

oder 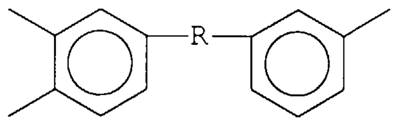

und R bedeutet -O-, $-CH_2-$, -CO- oder $-SO_2-$; wobei die Polyamidsäure in einem Molverhältnis (A)/(B)/(C) von 100/60-100/2 - 20 vorliegt und folgender Gleichung genügt:

$$0{,}95 < \frac{\text{Äquivalent von Tetracarbonsäuredianhydrid}}{\text{Äquivalent von Aminen}} < 1{,}05$$

**22.** Polyimidharz gemäß Anspruch 21, worin das Polyimidharz in Form eines Films vorliegt.

**23.** Verfahren gemäß Anspruch 13, worin der Dehydratisierungs- und Cyclisierungsschritt durchgeführt wird nach Trocknen des Reaktionsproduktes zur Entfernung des Lösungsmittels und anschließendes Erhitzen der Polyamidsäure auf eine Temperatur nicht über 500 °C.

**24.** Verfahren gemäß Anspruch 12, umfassend die folgenden zusätzlichen Schritte:

(c) Entfernung des organischen Lösungsmittels aus dem Gelfilm bei einer Temperatur von höchstens 100 °C, um den Lösungsmittelgehalt des Gelfilms auf höchstens 50 Gew.-% zu verringern.

(d) Dehydratisierung und Cyclisierung des Polyamidsäuregelfilms, zur Herstellung eines Polyimidfilms.

**25.** Verfahren gemäß Anspruch 24, worin Schritt (c) den Lösungsmittelgehalt des Polyamidsäurefilms auf nicht höher als 40 Gew.-% reduziert und der Dehydratisierungs- und Cyclisierungsschritt (d) durchgeführt wird durch Erhitzen des Polyamidsäuregelfilms auf eine Temperatur von bis zu 500 °C für eine Zeit, die ausreicht, um das Polyamidsäuregel im wesentlichen in ein Polyimid zu überführen.

**Revendications**

**1.** Acide polyamique ayant une structure moléculaire en réseau tridimensionnel produit par une réaction de polyaddition avec ouverture de cycle entre

(A) au moins un dianhydride d'un acide tétracarboxylique ;
(B) au moins une diamine aromatique et
(C) au moins un composé polyamino choisi dans le groupe constitué par les composés représentés par la formule (I) ou (II):

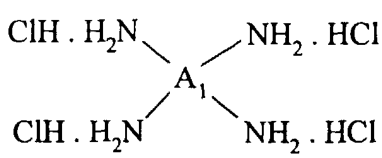

(I)

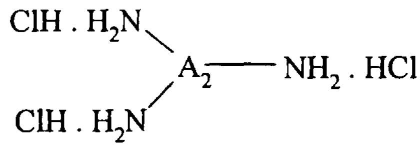

(II)

où $A_1$ représente

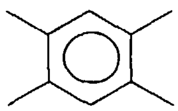 , 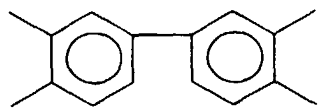 ou 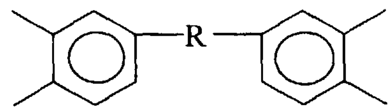 ;

$A_2$ représente

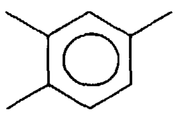 , 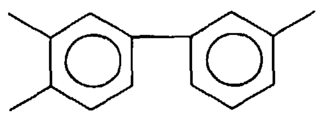 ou 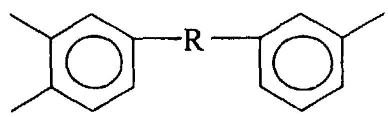 ;

R représente -O-, $-CH_2-$, -CO- ou $-SO_2-$ ; ledit acide polyamique contient un rapport molaire (A)/(B)/(C) de 100/60 - 100/2 - 20 et satisfait à la relation suivante :

$$0{,}95 < \frac{\textit{équivalent de dianhydride d'acide tétracarboxylique}}{\textit{équivalent d'amines}} < 1{,}05.$$

**2.** Acide polyamique selon la revendication 1, dans lequel ledit dianhydride d'acide tétracarboxylique est choisi parmi le dianhydride pyromellitique, le dianhydride de l'acide 3,3',4,4'-benzophénone-tétracarboxylique, le dianhydride de l'acide 3,3',4,4'-biphényltétracarboxylique, le dianhydride de l'acide 2,3,3',4'-biphényltétracarboxylique, le dianhydride de l'acide 2,2',3,3'-biphényltétracarboxylique, le dianhydride de l'acide 2,2',6,6'-biphényltétracarboxylique, le dianhydride de l'acide 2,3,6,7-naphtalène-tétracarboxylique, le dianhydride de l'acide 1,2,5,6-naphtalène-tétracarboxylique, le dianhydride du 2,2-bis(3,4-dicarboxyphényl)propane, le dianhydride de la bis(3,4-dicarboxyphényl)sulfone, le dianhydride de l'éther bis(3,4-dicarboxyphénylique), le dianhydride de l'acide 3,4,9,10-pérylènetétracarboxylique, le dianhydride de l'acide naphtalène-1,2,4,5-tétracarboxylique, le dianhydride de l'acide naphtalène-1 ,4,5,8-tétracarboxylique, le dianhydride de l'acide benzène-1,2,3,4-tétracarboxylique et l'éthylèneglycol bis (anhydrotrimellitate).

**3.** Acide polyamique selon la revendication 1, dans lequel ladite diamine aromatique est choisie parmi la m-phénylènediamine, la p-phénylène-diamine, le 4,4'-diaminodiphénylpropane, le 4,4'-diaminodiphénylméthane, le 3,3'-diaminodiphénylméthane, le sulfure de 4,4'-diaminodiphényle, la 4,4'-diaminodiphénylsulfone, la 3,3'-diaminodiphénylsulfone, la 3,4'-diaminodiphénylsulfone, l'éther 4,4'-diaminodiphénylique, l'éther 3,3'-diaminodiphénylique, l'éther 3,4'-diaminodiphénylique, la 4,4'-diaminobenzophénone, la 3,3'-diaminobenzophénone, le 2,2'-bis(4-aminophényl)propane, la benzidine, le 3,3'-diaminobiphényle, la 2,6-diaminopyridine, la 2,5-diaminopyridine, la 3,4-diaminopyridine, la bis[4-(4-aminophénoxy)phényl]sulfone, la bis[4-(3-aminophénoxy)phényl]sulfone, l'éther bis[4-(4-aminophénoxy)phénylique], l'éther bis[4-(3-aminophénoxy)phénylique], le 2,2'-bis[4-(4-aminophénoxy) phényl]propane, le 2,2'-bis[4-(3-aminophénoxy)phényl]propane, le 4,4'-bis(4-aminophénoxy)biphényle, le 1,4-bis (4-aminophénoxy)benzène, le 1,3-bis(4-aminophénoxy)benzène, le 2,2'-bis[4-(3-aminophénoxy)phényl]hexafluoropropane, le 1,5-diarninonaphtalène, le 2,6-diaminonaphtalène et leurs dérivés.

**4.** Acide polyamique selon la revendication 1, ledit acide polyamique ayant une masse moléculaire allant de 10 000 à 300 000.

**5.** Acide polyamique selon la revendication 1, ledit acide polyamique étant sous la forme d'un gel à forme stable, capable de conserver sa forme sans subir de déformation à 25°C.

**6.** Acide polyamique selon la revendication 5, ledit gel contenant un solvant organique en une quantité située entre 50 et 97 % en masse par rapport à la masse totale du gel.

**7.** Acide polyamique selon la revendication 5, ledit gel à forme stable étant sous la forme d'un film.

**8.** Procédé de fabrication d'un acide polyamique ayant une structure moléculaire en réseau tridimensionnel comprenant la réalisation d'une réaction de polyaddition avec ouverture de cycle entre (A) au moins un dianhydride d'un acide tétracarboxylique, (B) au moins une diamine aromatique et (C) au moins un composé polyarnino choisi parmi les composés représentés par la formule (I) ou (II) dans un solvant organique à une température située entre -10 et +30°C

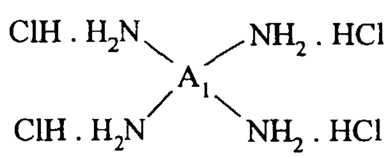

(I)

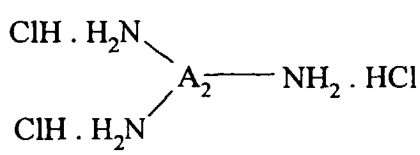

(II)

où $A_1$ représente

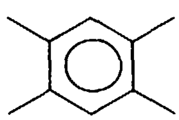
,
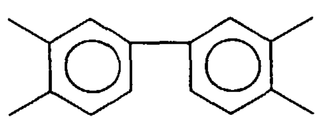
ou
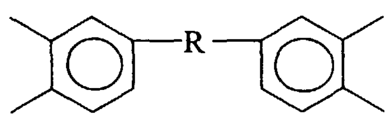
;

$A_2$ représente

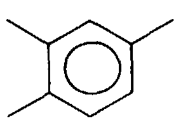
,
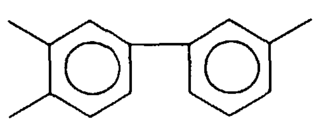
ou
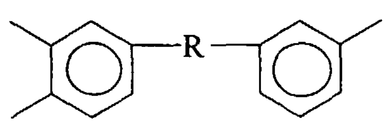
;

R représente -O-, $-CH_2-$, -CO- ou $-SO_2-$ ; ledit acide polyamique contient un rapport molaire (A)/(B)/(C) de 100/60 - 100/2 - 20 et satisfait à la relation suivante :

$$0,95 < \frac{\textit{équivalent de dianhydride d'acide tétracarboxylique}}{\textit{équivalent d'amines}} < 1,05.$$

**9.** Procédé selon la revendication 8, dans lequel ledit produit de réaction acide polyamique est sous la forme d'un gel à forme stable capable de conserver sa forme sans subir de déformation à 25°C.

**10.** Procédé selon la revendication 8, dans lequel ledit solvant est utilisé en une quantité de 50 à 97 % en masse par rapport à la masse totale de l'acide polyamique à produire et du solvant.

**11.** Procédé selon la revendication 8, comprenant l'étape supplémentaire de coulage de la solution formée dans ladite étape sous la forme d'un film sur un support, ladite réaction étant achevée sur ledit support de manière à donner un film gélifié ayant ladite structure moléculaire en réseau tridimensionnel d'acide polyamique.

**12.** Procédé de production d'une résine polyimide comprenant les étapes

(a) de la réalisation d'une réaction de polyaddition avec ouverture de cycle entre

(A) au moins un dianhydride d'un acide tétracarboxylique ;
(B) au moins une diamine aromatique et
(C) au moins un composé polyamino choisi parmi les composés représentés par la formule (I) ou (II) dans un solvant organique pour ces composés de réaction :

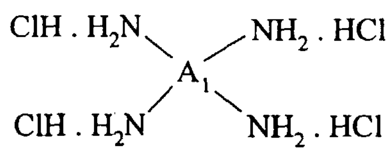

(I)

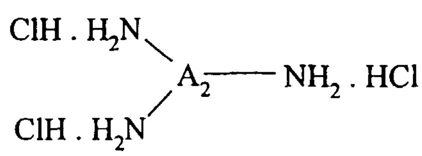

(II)

où $A_1$ représente

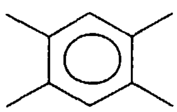 , 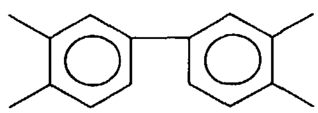 ou 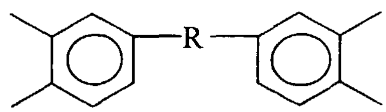 ;

$A_2$ représente

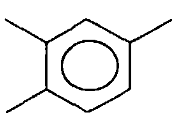 , 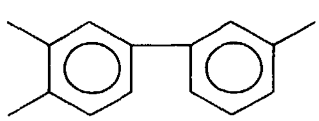 ou 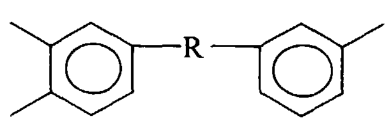 ;

R représente -O-, $-CH_2-$, -CO- ou $-SO_2-$ ; ledit acide polyamique contient un rapport molaire (A)/(B)/(C) de 100/60 - 100/2 - 20 et satisfait à la relation suivante :

$$0{,}95 < \frac{\textit{équivalent de dianhydride d'acide tétracarboxylique}}{\textit{équivalent d'amines}} < 1{,}05$$

(b) de la déshydratation et de la cyclisation dudit acide polyamique pour produire une résine polyimide.

**13.** Procédé selon la revendication 12, dans lequel ladite étape de déshydratation et cyclisation est réalisée après

séchage du produit de réaction pour éliminer le solvant, puis par chauffage de l'acide polyamique.

**14.** Procédé selon la revendication 12, dans lequel ladite étape de déshydratation et cyclisation est réalisée en chauffant ledit acide polyamqiue sous la forme d'un gel.

**15.** Procédé selon la revendication 14, dans lequel ledit gel d'acide polyamique contient 50 à 97 % en masse dudit solvant organique.

**16.** Procédé selon la revendication 12, dans lequel ladite étape de déshydratation et de cyclisation est réalisée en mettant en contact ledit acide polyamique avec une solution d'agent déshydratant.

**17.** Procédé selon la revendication 12, dans lequel ladite étape de déshydratation et de cyclisation comprend les étapes d'élimination d'au moins une partie dudit solvant organique dudit acide polyamique, puis la mise en contact dudit acide polyamique avec une solution d'agent déshydratant.

**18.** Procédé selon la revendication 12, dans lequel ledit agent déshydratant est un anhydride d'acide et ladite réaction de déshydratation et de cyclisation est conduite en présence d'une amine comme catalyseur.

**19.** Procédé selon la revendication 12, comprenant l'étape supplémentaire de coulage de la solution formée dans l'étape (a) sous la forme d'un film sur un support, ladite réaction dans l'étape (a) étant achevée sur ledit support pour donner un film gélifié ayant ladite structure moléculaire en réseau tridimensionnel d'acide polyamique.

**20.** Procédé selon la revendication 12, comprenant les étapes supplémentaires :

de déshydratation et de cyclisation dudit film gélifié d'acide polyamique pour donner un film de polyimide.

**21.** Résine de polyimide produite par la déshydratation et la cyclisation d'un acide polyamique ayant une structure moléculaire en réseau tridimensionnel, ledit acide polyamique étant produit par une réaction de polyaddition avec ouverture de cycle entre

(A) au moins un dianhydride d'un acide tétracarboxylique ;
(B) au moins une diamine aromatique et
(C) au moins un composé polyamino choisi parmi les composés représentés par la formule (I) ou (II):

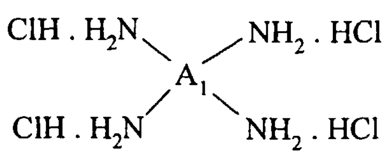

(I)

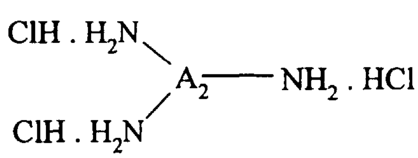

(II)

où $A_1$ représente

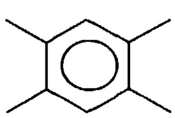 , 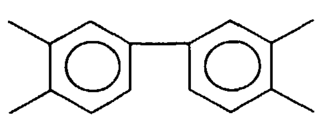 ou 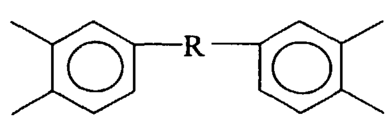 ;

$A_2$ représente

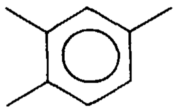 , 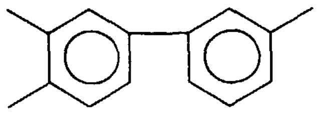 ou 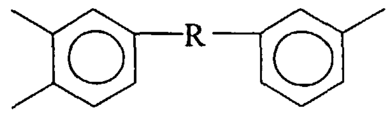 ;

R représente -O-, $-CH_2-$, -CO- ou $-SO_2-$ ; ledit acide polyamique contient un rapport molaire (A)/(B)/(C) de 100/60 - 100/2 - 20 et satisfait à la relation suivante :

$$0{,}95 < \frac{\textit{équivalent de dianhydride d'acide tétracarboxylique}}{\textit{équivalent d 'amines}} < 1{,}05.$$

**22.** Résine polyimide selon la revendication 21, ladite résine polyimide étant sous la forme d'un film.

**23.** Procédé selon la revendication 13, dans lequel ladite étape de déshydratation et de cyclisation est conduite après séchage du produit de réaction pour en éliminer le solvant, puis par chauffage de l'acide polyamique à une température ne dépassant pas 500°C.

**24.** Procédé selon la revendication 12, comprenant les étapes supplémentaires :

(c) d'élimination dudit solvant organique dudit film gélifié à une température d'au plus 100°C pour réduire le taux de solvant dudit film gélifié à au plus 50 % en masse ;
(d) de déshydratation et de cyclisation dudit film gélifié d'acide polyamique pour donner un film de polyimide.

**25.** Procédé selon la revendication 24, où, dans l'étape (c), le taux de solvant dudit film d'acide polyamique est réduit de façon à ne pas dépasser 40 % en masse et ladite étape de déshydratation et de cyclisation (d) est effectuée en chauffant ledit film gélifié d'acide polyamique à une température jusqu'à 500°C pendant une durée suffisante pour convertir substantiellement ledit gel d'acide polyamique en polyimide.